(19) Europäisches Patentamt
European Patent Office
Office européen des brevets

(11) Veröffentlichungsnummer: **0 387 203**
**A2**

(12) # EUROPÄISCHE PATENTANMELDUNG

(21) Anmeldenummer: **90810168.6**

(22) Anmeldetag: **05.03.90**

(51) Int. Cl.[5]: **C08G 73/10, C08G 73/14, C08G 69/48**

(30) Priorität: **10.03.89 CH 907/89**

(43) Veröffentlichungstag der Anmeldung: **12.09.90 Patentblatt 90/37**

(84) Benannte Vertragsstaaten: **DE ES FR GB IT NL SE**

(71) Anmelder: **CIBA-GEIGY AG**
**Klybeckstrasse 141**
**CH-4002 Basel(CH)**

(72) Erfinder: **Eldin, Sameer H., Dr.**
**Route de Schiffenen 10**
**CH-1700 Fribourg(CH)**

(54) **Nichtreaktive Endgruppen aufweisende Polyamid- und Polyimidverbindungen.**

(57) Polyamide, Polyamid-amidsäuren oder Polyamidsäuren, enthaltend das wiederkehrende Strukturelement der Formel I

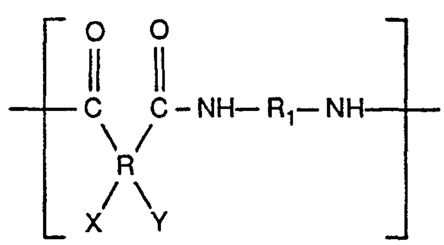

(I)

sowie die zum entsprechenden Polyamidimid bzw. Polyimid cyclisierten Derivate, worin X und Y je für -H oder -COOH stehen, R und $R_1$ je einen aliphatischen, cycloaliphatischen oder aromatischen Rest bedeutet, wobei mindestens 1 Mol% der Reste $R_1$ für einen Rest der Formel

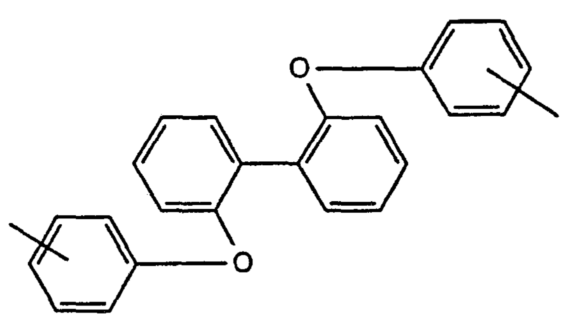

(II)

stehen, und enthaltend Endgruppen der Formel IV, VI, VIII, IX oder X



Xerox Copy Centre

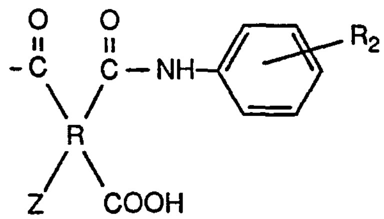

(IV)

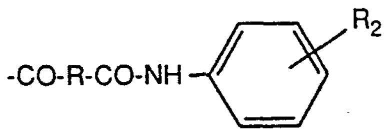

(VI)

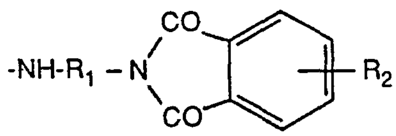

(VIII)

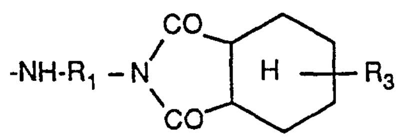

(IX)

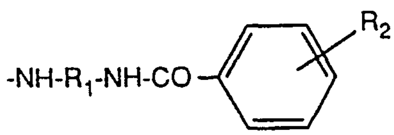

(X)

worin Z für X oder Y steht, R und $R_1$ die gleiche Bedeutung wie in Formel I haben, $R_2$ für ein Wasserstoffatom, $C_1$-$C_4$-Alkyl, $C_1$-$C_4$-Alkoxy, Halogenatom oder eine Nitrogruppe steht, stellen hydrolyse- und oxidationsresistente Polymere mit guten Verarbeitungseigenschaften dar.

## Nichtreaktive Endgruppen aufweisende Polyamid- und Polyimidverbindungen

Der Gegenstand vorliegender Erfindung betrifft neue nichtreaktive Endgruppen aufweisende Polyamide, Polyamid-amidsäuren, Polyamidsäuren sowie die zum entsprechenden Polyamidimid oder Polyimid cyclisierten Derivate, enthaltend als Diamin ein 2,2′-Di-(aminophenoxy)-biphenyl.

Polyamide, Polyamid-amidsäuren, Polyamidsäuren und die entsprechenden cyclisierten Derivate, welche unter Verwendung eines 2,2′-Di-(aminophenoxy)-biphenyls hergestellt wurden, sind aus der DE-OS 27 26 541 bekannt. Sie werden hergestellt, indem man das betreffende Diamin oder ein, das betreffende Diamin enthaltendes Diamingemisch mit im wesentlichen stöchiometrischen Mengen eines Polycarbonsäureanhydrides oder Polycarbonsäurechlorides umsetzt. Dabei werden Polymere mit sowohl reaktiven Anhydrid-oder Säurechloridendgruppen als auch reaktiven Aminoendgruppen oder mit vorwiegend nur einer der drei reaktiven Endgruppen erhalten. Die mechanischen Festigkeiten der aus solchen Polymeren hergestellten Formstoffe lassen noch zu wünschen übrig, da die Polymeren hydrolyse- und oxidationsempfindlich sind.

Es wurde nun gefunden, dass man durch Umwandlung der oben genannten, reaktive Endgruppen enthaltende Polymere in bestimmte, nichtreaktive Endgruppen aufweisende Polymere hydrolyse- und oxidationsresistente Polymere erhält, die besser verarbeitbar sind und Formstoffe mit besseren mechanischen Festigkeiten ergeben.

Gegenstand vorliegender Erfindung sind somit Polyamide, Polyamid-amidsäuren oder Polyamidsäuren, enthaltend das wiederkehrende Strukturelement der Formel I

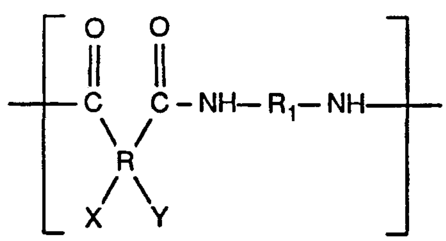

(I)

sowie die zum entsprechenden Polyamidimid bzw. Polyimid cyclisierten Derivate, worin X und Y unabhängig voneinander je für -H oder -COOH stehen,
R einen aliphatischen Rest mit mindestens 2 Kohlenstoffatomen, einen cycloaliphatischen, carbocyclisch-aromatischen oder heterocyclisch-aromatischen Rest bedeutet, wobei die Carbonamid- und Carboxylgruppen an verschiedene Kohlenstoffatome gebunden sind und sich die Carboxylgruppen, falls R einen cyclischen Rest und mindestens eines von X oder Y für die Carboxylgruppe steht, je in ortho-Stellung zu einer Carbonamidgruppe befinden, und $R_1$ einen aliphatischen Rest mit mindestens zwei Kohlenstoffatomen, einen cycloaliphatischen, araliphatischen, carbocyclischaromatischen oder heterocyclischaromatischen Rest bedeutet, wobei mindestens 1 Mol% der Reste $R_1$ für einen Rest der Formel

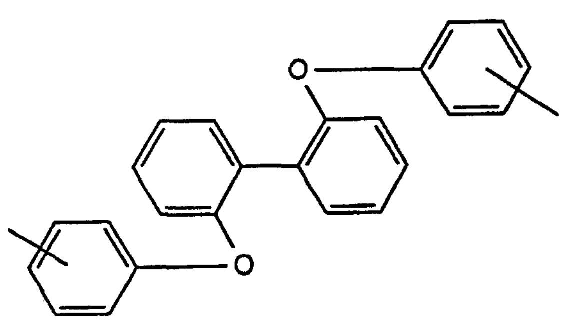

(II)

steht, dadurch gekennzeichnet, dass mindestens 25 Mol% der endständigen Anhydridgruppen der Formel III oder IIIa

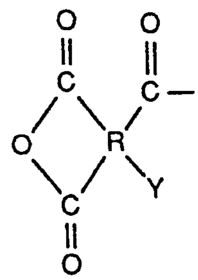 (III) oder 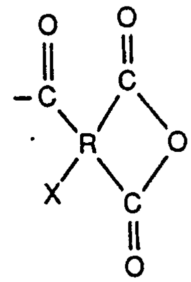 (IIIa),

worin X, Y und R die gleiche Bedeutung wie in Formel I haben, als eine Gruppe der Formel IV

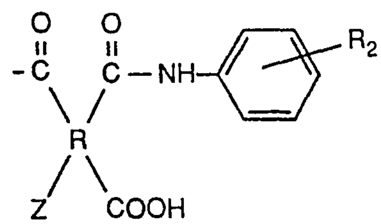

(IV)

vorliegen, worin Z für X oder Y steht und $R_2$ ein Wasserstoffatom, $C_1$-$C_4$-Alkyl, $C_1$-$C_4$-Alkoxy, Halogenatom oder eine Nitrogruppe bedeutet, mindestens 25 Mol% der endständigen Säurechloridgruppen der Formel V
-CO-R-COCl (V),
worin R die gleiche Bedeutung wie in Formel I hat, als eine Gruppe der Formel VI

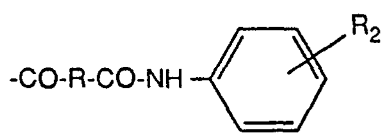

(VI)

vorliegen, worin $R_2$ die gleiche Bedeutung wie in Formel IV hat, mindestens 25 Mol% der endständigen Aminogruppen der Formel VII
$-NH-R_1-NH_2$ (VII),
worin $R_1$ die gleiche Bedeutung wie in Formel I hat, als eine Gruppe der Formel VIII, IX oder X

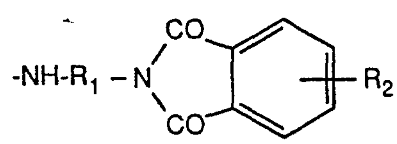

(VIII)

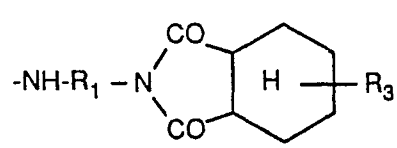

(IX)

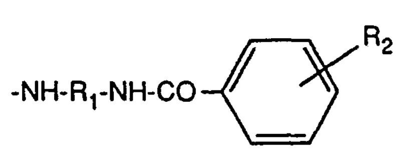

(X)

vorliegen, worin $R_2$ die gleiche Bedeutung wie in Formel IV hat und $R_3$ für ein Wasserstoffatom oder $C_1$-$C_4$-Alkyl steht, oder mindestens 25 Mol% aller endständigen Anhydrid-und Aminogruppen, endständigen Säurechlorid- und Aminogruppen oder endständigen Anhydrid-, Säurechlorid- und Aminogruppen der

Formeln III, IIIa, V und VII als eine Gruppe der Formeln IV, VI, VIII, IX und X vorliegen.

Vorzugsweise bedeuten $R_2$ und $R_3$ in den Formeln IV, VI, VIII, IX und X je ein Wasserstoffatom.

Die erfindungsgemässen Polymere weisen im allgemeinen eine inhärente Viskosität ($\eta_{inh.}$) von 0,1 bis 3,0, vorzugsweise von 0,1 bis 2,0, insbesondere von 0,1 bis 1,0, auf.

Es ist allgemein bekannt, dass die inhärente Viskosität ein Mass für das Molekulargewicht von Polymeren darstellt. Die angegebenen Werte der inhärenten Viskosität von 0,1 bis 2,5 entsprechen einem durchschnittlichen Molekulargewichtsbereich von etwa $10^3$ bis $10^6$.

Vorzugsweise sind in den erfindungsgemässen Polymeren mindestens 40 Mol%, insbesondere mindestens 50 Mol%, aller endständigen Anhydrid-, Säurechlorid- oder Aminogruppen mit einer Gruppe der Formel IV, VI oder VIII bis X verkappt. In einer besonderen Ausführungsform der Erfindung sind alle endständigen Anhydrid-, Säurechlorid- oder Aminogruppen mit einer Gruppe der Formel IV, VI oder VIII bis X verkappt.

Die erfindungsgemässen Polymere weisen vorzugsweise eine Endgruppe der Formel IV, VIII oder X, insbesondere eine Endgruppe der Formel VIII oder X, auf.

Ferner stehen in den wiederkehrenden Strukturelementen der Formel I vorzugsweise mindestens 10 Mol%, insbesondere mindestens 50 Mol% der Reste $R_1$ für einen Rest der Formel II.

In den einzelnen Strukturelementen der Formel I können R, X, Y und $R_1$ unterschiedliche Bedeutung haben. Bei den erfindungsgemässen Polymeren handelt es sich somit um Homopolymere oder um Copolymere mit statistischer Verteilung einzelner Strukturelemente mit unterschiedlicher Bedeutung von R, X, Y oder $R_1$.

Im Strukturelement der Formel I stellen X und Y vorzugsweise je eine Carboxylgruppe dar.

Stellt R im Strukturelement der Formel I einen aliphatischen Rest dar, so handelt es sich bevorzugt um unsubstituierte, geradkettige oder verzweigte Alkylengruppen mit 2-10 Kohlenstoffatomen. Bei durch R dargestellten cycloaliphatischen Resten handelt es sich vor allem um 5- oder 6-gliedrige Cycloalkylengruppen.

Bedeutet R einen carbocyclisch-aromatischen Rest, so weist dieser bevorzugt mindestens einen 6-gliedrigen Ring auf; insbesondere handelt es sich dabei um monocyclische, um kondensierte polycyclische oder um polycyclische Reste mit mehreren cyclischen, kondensierten oder nicht kondensierten Systemen, die miteinander direkt oder über Brückenglieder verbunden sein können. Als geeignete Brückenglieder seien beispielsweise erwähnt

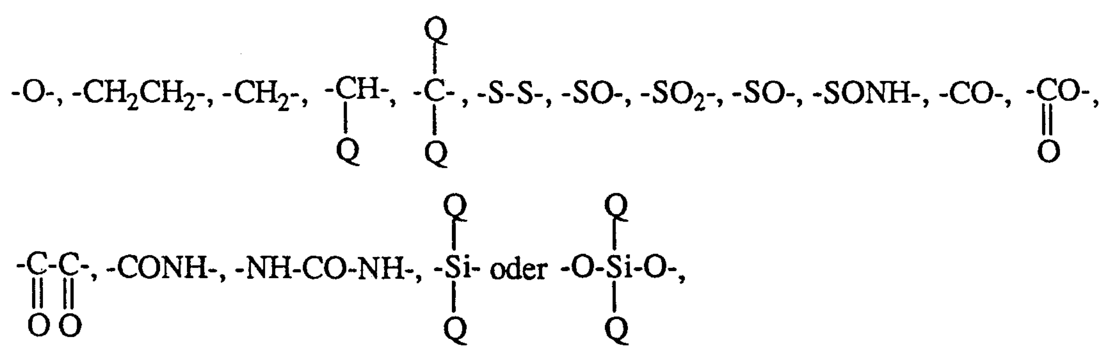

worin Q eine Alkylgruppe mit 1-6 Kohlenstoffatomen, vorzugsweise 1-4 Kohlenstoffatomen, oder eine Phenylgruppe bedeutet.

Bedeutet R einen heterocyclisch-aromatischen Rest, so kommen insbesondere 5- oder 6-gliedrige heterocyclisch-aromatische, gegebenenfalls benzo-kondensierte, O-, N-und/oder S-haltige Ringsysteme in Betracht.

Durch R dargestellte carbocyclisch-aromatische oder heterocyclisch-aromatische Reste können auch substituiert sein, beispielsweise durch Nitrogruppen, Alkylgruppen mit 1-4 Kohlenstoffatomen, Trifluormethylgruppen, Halogenatome, insbesondere Chlor, Silyl-, Sulfonsäure- oder Sulfamoylgruppen.

Durch $R_1$ dargestellte aliphatische, araliphatische, cycloaliphatische, carbocyclisch-aromatische oder heterocyclisch-aromatische Reste können unsubstituiert oder substituiert sein, z.B. durch Halogenatome, wie Fluor, Chlor oder Brom, oder durch Alkyl- oder Alkoxygruppen mit je 1-4 Kohlenstoffatomen.

Als aliphatische Reste $R_1$ kommen vor allem geradkettige oder verzweigte Alkylengruppen mit 2-12 Kohlenstoffatomen in Betracht, wobei die Alkylenkette auch durch Heteroatome, wie O-, S- oder N-Atome, unterbrochen sein kann.

$R_1$ in der Bedeutung eines cycloaliphatischen Restes stellt z.B. die 1,3- oder 1,4-Cyclohexylen-, 1,4-Bis-(methylen)-cyclohexan- oder Dicyclohexylmethangruppe dar, während als araliphatische Reste vor allem 1,3-, 1,4- oder 2,4-Bis-alkylenbenzol-, 4,4'-Bis-alkylen-diphenyl-und 4,4'-Bis-alkylen-diphenylätherreste in Betracht kommen.

Stellt $R_1$ einen carbocyclisch-aromatischen Rest dar, so handelt es sich dabei vorzugsweise um monocyclische, um kondensierte polycyclische oder um unkondensierte bicyclische aromatische Reste, wobei bei letzteren die Aromatenkerne, über ein Brückenglied miteinander verbunden sind. Als Brückenglieder kommen die gleichen, bei der Besprechung von R genannten Gruppen in Betracht.

Falls $R_1$ einen heterocyclisch-aromatischen Rest bedeutet, so handelt es sich insbesondere um heterocyclisch-aromatische 5- oder 6-gliedrige, O-, N- und/oder S-haltige Ringe.

Vorzugsweise stellt R eine unsubstituierte Alkylengruppe mit 4-10 Kohlenstoffatomen, einen unsubstituierten monocyclischen, einen kondensierten bicyclischen oder einen unkondensierten bycyclischen aromatischen Rest dar, wobei bei letzterem die Aromatenkerne über das Brückenglied -O-,-CO- oder $-SO_2-$ miteinander verbunden sind, während $R_1$ eine unsubstituierte Alkylengruppe mit 2-10 Kohlenstoffatomen, eine Bis-(methylen)-cyclohexangruppe, einen unsubstituierten oder durch Halogenatome, Alkyl- oder Alkoxygruppen mit je 1-4 Kohlenstoffatomen substituierten monocyclischen oder unkondensierten bicyclischen aromatischen Rest bedeutet.

Besonders bevorzugt sind definitionsgemässe Polymere, worin im Strukturelement der Formel I R einen Benzolring oder das Benzophenonringsystem, X und Y je eine Carboxylgruppe und $R_1$ die 1,3- oder 1,4-Phenylengruppe, den 4,4'-Diphenylmethan- oder 4,4'-Diphenylätherrest und einen Rest Formel II bedeuten, der in para- oder ortho-Stellung, vorzugsweise in para-Stellung an die NH-Gruppen in Formel I gebunden ist, sowie die zum entsprechenden Polyimid cyclisierten Derivate.

Die erfindungsgemässen Polyamide, Polyamid-amidsäuren sowie die zum entsprechenden Polyamidimid oder Polyimid cyclisierten Derivate können hergestellt werden, indem man

(a) 1 Mol einer Verbindung enthaltend das wiederkehrende Strukturelement der Formel I und endständige Anhydridgruppen der Formeln III und IIIa mit 0,5 bis 2 Mol eines unsubstituierten oder durch $C_1$-$C_4$-Alkyl, $C_1$-$C_4$-Alkoxy, Halogen oder Nitrogruppe substituierten Anilins umsetzt oder

(b) 1 Mol einer Verbindung enthaltend das wiederkehrende Strukturelement der Formel I und endständige Säurechloridgruppen der Formel V mit 0,5 bis 2 Mol eines unsubstituierten oder durch $C_1$-$C_4$-Alkyl, $C_1$-$C_4$-Alkoxy, Halogen oder Nitrogruppe substituierten Anilins umsetzt oder

(c) 1 Mol einer Verbindung enthaltend das wiederkehrende Strukturelement der Formel I und endständige Aminogruppen der Formel VII mit 0,5 bis 2 Mol eines unsubstituierten oder durch $C_1$-$C_4$-Alkyl, $C_1$-$C_4$-Alkoxy, Halogen oder Nitrogruppen substituierten Phthalsäureanhydrids, unsubstituierten oder durch $C_1$-$C_4$-Alkyl substituierten Hexahydrophthalsäureanhydrids oder unsubstituierten oder durch $C_1$-$C_4$-Alkyl, $C_1$-$C_4$-Alkoxy, Halogen oder Nitrogruppe substituierten Benzoesäurechlorids umsetzt oder

(d) 1 Mol einer Verbindung enthaltend das wiederkehrende Strukturelement der Formel I und endständige Anhydrid- und Aminogruppen, oder endständige Säurechlorid und Aminogruppen oder endständige Anhydrid-, Säurechlorid- und Aminogruppen der Formeln III, IIIa, V oder VII mit 0,1 bis 1,9 Mol eines unsubstituierten oder substituierten Anilins und 0,1 bis 1,9 Mol eines unsubstituierten oder substituierten Phthalsäureanhydrids, unsubstituierten oder substituierten Hexahydrophthalsäureanhydrids oder unsubstituierten oder substituierten Benzoesäurechlorids umsetzt, wobei die Gesamtmenge an Anilin, Phthalsäureanhydrid, Hexahydrophthalsäureanhydrid und Benzoesäurechlorid 0,5 bis 2,0 Mol beträgt, oder

(e) 1 Mol einer Verbindung enthaltend das wiederkehrende Strukturelement der Formel I und endständige Anhydrid- und Säurechloridgruppen der Formel III, IIIa und V mit 0,5 bis 2,0 Mol eines unsubstituierten oder substituierten Anilins umsetzt und das erhaltene Polymer, worin X oder Y sowie X und Y für den Rest -COOH stehen, gegebenenfalls anschliessend zu den Polyamidimiden bzw. Polyimiden cyclisiert.

Im allgemeinen führt man die oben angegebene Umsetzung in einem üblichen inerten organischen Lösungsmittel, vorzugsweise in einem polaren, aprotischen Lösungsmittel, wie beispielsweise Dimethylsulfoxid, Dimethylacetamid, Diäthylacetamid, Tetramethyl harnstoff, N-Methylcaprolactam, N-Methylpyrrolidon, Aceton, Dioxan, Essigester oder Tetrahydrofuran, durch. Dabei werden Temperaturen von etwa -20°C bis etwa 50°C angewendet.

Die allfällige Cyclisierung der nach der Verkappung der Anhydrid-, Säurechlorid- oder Aminoendgruppen anfallenden Polyamidsäuren oder Polyamid-amidsäuren erfolgt nach an sich bekannter Weise chemisch oder thermisch.

Die chemische Cyclisierung wird zweckmässig durch Behandlung mit einem Dehydratisierungsmittel allein oder im Gemisch mit einem tertiären Amin vorgenommen. In Frage kommen z.B. Essigsäureanhydrid, Propionsäureanhydrid und Dicyclohexylcarbodiimid oder Gemisch von Essigsäureanhydrid und Triäthylamin.

Die thermische Cyclisierung wird durch Erhitzen auf Temperaturen von etwa 50 °C bis 300 °C, vorzugsweise etwa 150 °C bis 250 °C, und gegebenenfalls unter Zusatz eines inerten organischen Lösungsmittels vorgenommen.

Verbindungen, enthaltend das wiederkehrende Strukturelement der Formel I sind aus der DE-OS 27 26 541 bekannt und können beispielsweise hergestellt werden, indem man eine aliphatische, cycloaliphatische oder aromatische Di-, Tri- oder Tetracarbonsäure, deren Anhydrid oder Säurechlorid mit im wesentlichen stöchiometrischen Mengen 2,2′-Di-(aminophenoxy)-biphenyl oder eines, ein 2,2′-Di-(aminophenoxy)-biphenyl enthaltenden Gemisches aus aliphatischen, cycloaliphatischen oder aromatischen Diaminen umsetzt oder indem man vorzugsweise n Mole einer aliphatischen, cycloaliphatischen oder aromatischen Di-, Tri- oder Tetracarbonsäure, deren Anhydrid oder Säurechlorid mit n + 1 Molen 2,2′-Di-(aminophenoxy)-biphenyl oder eines, ein 2,2′-Di-(aminophenoxy)-biphenyl enthaltenden Gemisches aus aliphatischen, cycloaliphatischen oder aromatischen Diaminen umsetzt. Desgleichen kann die Umsetzung auch so geführt werden, dass die Säurekomponente im Ueberschuss vorliegt.

Geeignete Säurekomponenten sind beispielsweise Malonsäure, Dimethylmalonsäure, Bernsteinsäure, Glutarsäure, Adipinsäure, Süberinsäure, Sebacinsäure und Dodecandicarbonsäure, 1,3-Cyclopentan-dicarbonsäure, Hexahydroisophthalsäure, Hexahydroterephthalsäure, Terephthalsäure, Isophthalsäure, 4,4′-Dicarboxydiphenyläthan, Naphthalin-2,6-dicarbonsäure, Thiophen-2,5-dicarbonsäure, Pyridin-2,3-dicarbonsäure, sowie die entsprechenden Dichloride, Trimellitsäure-1,2-anhydrid-chlorid (1,3-Dioxo-benzo[c]oxalan- 5-carbonsäurechlorid), Trimellitsäureanhydrid, Trimellitsäure, Pyromellitsäuredianhydrid, 3,3′,4,4′-Benzophenon-tetracarbonsäuredianhydrid, 2,3,3′,4′-Benzophenon-tetracarbonsäuredianhydrid, 2,2′,3,3′-Benzophenon-tetracarbonsäuredianhydrid, 3,3′,4,4′-Diphenyltetracarbonsäuredianhydrid, Bis(2,3-dicarboxyphenyl)methan-dianhydrid, Bis(2,5,6-trifluor-3,4-dicarboxyphenyl)methandianhydrid, 2,2-Bis(2,3-dicarboxyphenyl)propan-dianhydrid, Bis(3,4-dicarboxyphenyl)ätherdianhydrid, Bis(3,4-dicarboxyphenyl)-sulfondianhydrid, N,N-(3,4-dicarboxyphenyl)-N-methylamin-dianhydrid, Bis-(3,4-dicarboxyphenyl)-diäthyl silan-dianhydrid, 2,3,6,7- und 1,2,5,6-Naphthalin-tetracarbonsäuredianhydrid, 2,6-Dichlornaphthalin-1,4,5,8-tetracarbonsäuredianhydrid, Thiophen-2,3,4,5-tetracarbonsäuredianhydrid, Pyrazin-2,3,5,6-tetracarbonsäuredianhydrid und Pyridin-2,3,5,6-tetracarbonsäuredianhydrid,

Als Diamine können beispielsweise eingesetzt werden: o-, m- und p-Phenylendiamin, Diaminotoluole, wie 2,4-Diaminotoluol, 1,4-Diamino-2-methoxybenzol, 2,5-Diaminoxylol, 1,3-Diamino-4-chlorbenzol, 4,4′-Diamino-diphenylmethan, 4,4′-Diaminodiphenyläther, 4,4′-Diaminodiphenylthioäther, 4,4′-Diaminodiphenylsulfon, 2,2′-Diaminobenzophenon, 4,4′-Diaminodiphenylharnstoff, 1,8- oder 1,5-Diaminonaphthalin; 2,6-Diaminopyridin, 1,4-Piperazin, 2,4-Diaminopyrimidin, 2,4-Diamino-s-triazin, Di-, Tri-, Tetra-, Hexa-, Hepta-, Octa- und Decamethylendiamin, 2,2-Dimethylpropylendiamin, 2,5-Dimethylhexamethylendiamin, 4,4-Dimethylheptamethylendiamin, 3-Methylheptamethylendiamin, 3-Methoxyhexamethylendiamin, 2,11-Diaminododecan, 2,2,4- und 2,4,4-Trimethylhexamethylendiamin, 1,2-Bis(3-aminopropoxy)-äthan, N,N′-Dimethyläthylendiamin, N,N′-Dimethyl-1,6-diaminohexan sowie die Diamine der Formeln $H_2N(CH_2)_3O(CH_2)_2O(CH_2)_3NH_2$ und $H_2N(CH_2)_3S(CH_2)_3NH_2$; 1,4-Diaminocyclohexan, 1,4-Bis(2-methyl-4-aminopentyl)-benzol, 1,4-Bis-(aminomethyl)-benzol.

Die erfindungsgemässen Polymere können in der für Thermoplasten üblichen Weise eingesetzt und verarbeitet werden. Sie können beispielsweise als Press-, Ueberzugs- oder Beschichtungsmassen oder zur Herstellung von Filmen Verwendung finden. Vor dem Applizieren können den als Presspulver, Schmelzen oder Lösungen in einem üblichen organischen Lösungsmittel vorliegenden Polyamidsäuren, Polyamidimiden oder Polyimiden die üblichen Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polymere können auch zusammen mit Duroplasten, wie beispielsweise Epoxidharze oder Bismaleinimide, oder mit Thermoplasten, wie beispielsweise Polyester, Polyamide, Polyimide, Polyolefine oder Polyurethane, insbesondere mit den konventionellen Polyamidimiden, Polyimiden und deren Vorpolymeren, verarbeitet werden.

Gegenstand vorliegender Erfindung sind somit auch die aus den erfindungsgemässen Polymeren hergestellten Formstoffe und Beschichtungen.

Vorzugsweise eignen sich die erfindungsgemässen Polymere als Laminierharze für die Herstellung von Faserverbundsystemen, wobei man als Verstärkungsfasern die üblichen bei der Faserverstärkung von Werkstoffen verwendeten Fasern einsetzen kann. Diese können organische oder anorganische Fasern, Naturfasern oder Synthesefasern, wie Aramid-Fasern, sein und als Faserbündel oder Endlosfasern vorliegen. Beispielsweise verwendet man als Verstärkungsfasern Glas-, Asbest-, Bor-, Kohlenstoff- und Metallfasern, vorzugsweise Kohlenstoff- und Metallfasern. Solche Fasern und Gewebe daraus sind im Handel erhältlich.

Weiterer Erfindungsgegenstand sind auch Faserverbundsysteme, enthaltend Verstärkungsfasern und die erfindungsgemässen Polymere.

Beispiel 1:

In einem 1000 ml Sulfierkolben, versehen mit Ankerrührer, Thermometer, Kühler und $N_2$-Anschlussrohr, werden unter $N_2$-Atmosphäre 30,88 g (83,82 mMol) 2,2′-Di-(p-aminophenoxy)-biphenyl und 13,73 g (68,58 mMol) 4,4′-Diaminodiphenylether in 732 ml getrocknetem Dimethylacetamid (DMAA) unter Rühren gelöst, und die klare rotbraune Lösung wird auf -15°C abgekühlt. Bei dieser Temperatur werden innerhalb von 20 Minuten 45 g (139,7 mMol) Benzophenontetracarbonsäuredianhydrid portionenweise eingetragen, wobei die Reaktionstemperatur auf -15° bis -13°C konstant gehalten wird. Nach beendeter Zugabe wird die Reaktionslösung noch während 10 Minuten bei -15°C gerührt und anschliessend lässt man sie auf Raumtemperatur erwärmen. Danach wird die Reaktionslösung noch 2 Stunden bei Raumtemperatur gerührt. Zur Lösung der Polyamidsäure mit Amino-Endgruppen werden dann 3,76 g Phthalsäureanhydrid zugegeben und die Lösung wird während 3 Stunden bei Raumtemperatur gerührt.
Die inhärente Viskosität ($\eta_{inh.}$) der Polyamidsäure mit Phthalamidsäure-Endgruppen, gemessen als 0,5%-ige Lösung in DMAA bei 25°C, beträgt 0,21. Zur Isolation wird die Polyamidsäure-Lösung unter kräftigem Rühren portionenweise in Wasser eingetragen. Die hellgelbe, in Flocken ausgefallene Polyamidsäure wird filtriert, mit Wasser gewaschen und gut trocken gesaugt.
98 g der noch feuchten Polyamidsäure werden in 700 ml Mesitylen eingetragen und während 4,5 Stunden bei 163°C imidisiert. Nach dem Abkühlen wird filtriert, der Rückstand mit Hexan nachgewaschen und im Vakuum bei 80-90°C getrocknet. Es werden 82 g eines feinen gelben Pulvers erhalten. Ein aus dem Polyimidpulver hergestellter Formkörper weist einen Tg-Wert von 191°C auf.

Beispiele 2 bis 4:

Beispiel 1 wird unter Anwendung des Diamingemisches aus 2,2′-Di-(p-aminophenoxy)-biphenyl und 4,4′-Diaminodiphenylether im Molverhältnis von 55 zu 45 wiederholt, wobei nun das Molverhältnis der Diamine zu Benzophenontetracarbonsäuredianhydrid (BTDA) geändert wird. Diese Molverhältnisse, die $\eta_{inh.}$ der erhaltenen Polyamidsäuren mit Phthalamidsäure-Endgruppen und die Tg-Werte der aus den erhaltenen Polyimiden hergestellten Formkörper sind in Tabelle I angegeben.

Tabelle I:

| Beispiel | Molverhältnis Diamine/BTDA | $\eta_{inh.}$ | Tg-Wert (°C) |
|---|---|---|---|
| 1 | 12/11 | 0,21 | 191 |
| 2 | 24/23 | 0,28 | 214 |
| 3 | 40/39 | 0,34 | 213 |
| 4 | 54/53 | 0,39 | 218 |

Zur Bestimmung der $\eta_{inh.}$ werden 0,5%-ige Lösungen der betreffenden Polyamidsäuren in DMAA verwendet. Die Messungen werden in einem Ubbelohde-Viskosimeter bei 25°C vorgenommen. Zur Bestimmung der Tg-Werte werden aus den erhaltenen Polyimidpulvern kreisförmige Körper vom Durchmesser 62,5 mm hergestellt, die durch Anwendung von Druck und erhöhter Temperatur geformt werden. Aus diesen Körpern werden Proben für die Tg-Bestimmung mittels DMA (Dynamic Mechanical Analysis, 10°C/Minute) heraus geschnitten.

Beispiele 5-11:

Analog Beispiel 1 werden Polyimide hergestellt, in denen das Molverhältnis der beiden Diamine, 2,2′-Bis-(p-aminophenoxy)-biphenyl (Diamin I) und Diamin II, zu BTDA jeweils 54:53 entspricht. Die als Diamin II verwendeten Diamine, die $\eta_{inh.}$ der erhaltenen Polyamidsäuren und die Tg-Werte der Polyimide sind in Tabelle II angegeben.

Tabelle II:

| Beispiel | Mol% Diamine I | Diamin II | $\eta_{inh.}$ | Tg (°C) |
|---|---|---|---|---|
| 5 | 50 | 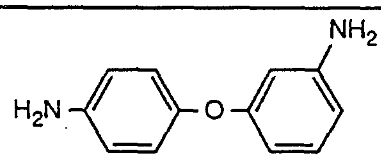 | 0,45 | 212 |
| 6 | 1 | 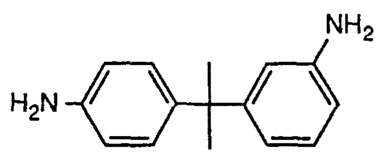 | 0,31 | 227 |
| 7 | 1 | 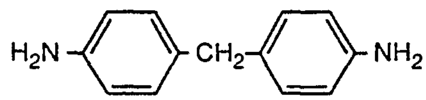 | 0,69 | 237 |
| 8 | 1 | 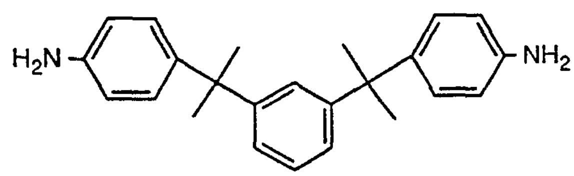 | 0,58 | 187 |
| 9 | 1 | 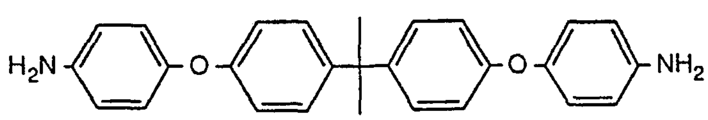 | 0,70 | 212 |
| 10 | 1 | 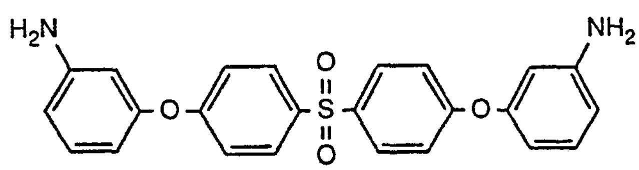 | 0,42 | 202 |
| 11 | 1 | 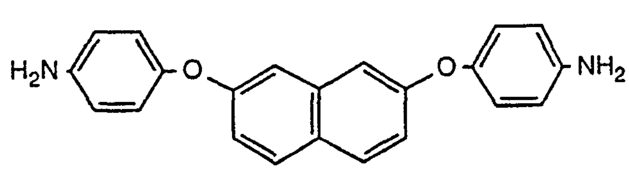 | 0,87 | 200 |

Herstellung der Formkörper

12,5 g des betreffenden Polyimids werden bei der unten angegebenen Temperatur in eine vorgewärmte Form gegeben, und innerhalb von 2 Minuten wird der unten angegebene Druck aufgepresst und während 10 Minuten gehalten. Anschliessend wird die Form unter Druck auf eine Temperatur unterhalb von 175 °C

abgekühlt und der Pressling aus der Form entfernt.

| Beispiel | Temperatur (°C) | Druck (Pa) |
|---|---|---|
| 1 | 300 | $6,4 \cdot 10^6$ |
| 2 | 300 | $1,3 \cdot 10^7$ |
| 3 | 320 | $1,9 \cdot 10^7$ |
| 4 | 320 | $1,6 \cdot 10^7$ |
| 5 | 300 | $1,6 \cdot 10^7$ |
| 6 | 280 | $1,3 - 1,6 \cdot 10^7$ |
| 7 | 320 | $2,0 \cdot 10^7$ |
| 8 | 320 | $1,3 \cdot 10^7$ |
| 9 | 320 | $1,3 - 1,6 \cdot 10^7$ |
| 10 | 300 | $1,3 - 1,6 \cdot 10^7$ |
| 11 | 300 | $1,3 \cdot 10^7$ |

## Ansprüche

1. Polyamide, Polyamid-amidsäuren oder Polyamidsäuren, enthaltend das wiederkehrende Strukturelement der Formel I

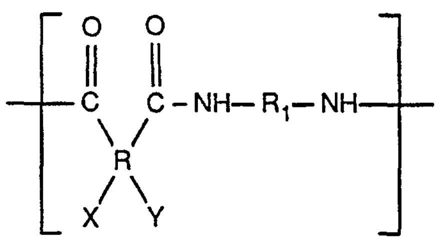

(I)

sowie die zum entsprechenden Polyamidimid bzw. Polyimid cyclisierten Derivate, worin X und Y unabhängig voneinander je für -H oder -COOH stehen,
R einen aliphatischen Rest mit mindestens 2 Kohlenstoffatomen, einen cycloaliphatischen, carbocyclisch-aromatischen oder heterocyclisch-aromatischen Rest bedeutet, wobei die Carbonamid- und Carboxylgruppen an verschiedene Kohlenstoffatome gebunden sind und sich die Carboxylgruppen, falls R einen cyclischen Rest und mindestens eines von X oder Y für die Carboxylgruppe steht, je in ortho-Stellung zu einer Carbonamidgruppe befinden, und $R_1$ einen aliphatischen Rest mit mindestens zwei Kohlenstoffatomen, einen cycloaliphatischen, araliphatischen, carbocyclisch-aromatischen oder heterocyclischaromatischen Rest bedeutet, wobei mindestens 1 Mol% der Reste $R_1$ für einen Rest der Formel

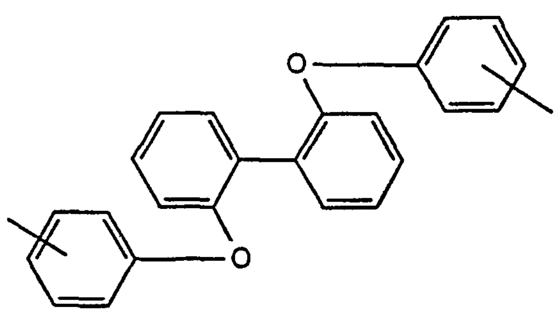

(II)

steht, dadurch gekennzeichnet, dass mindestens 25 Mol% der endständigen Anhydridgruppen der Formel III oder IIIa

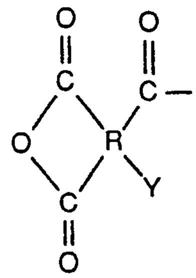 (III) oder 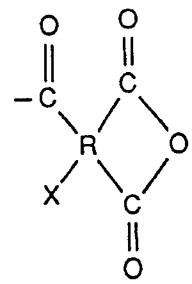 (IIIa),

worin X, Y und R die gleiche Bedeutung wie in Formel I haben, als eine Gruppe der Formel IV

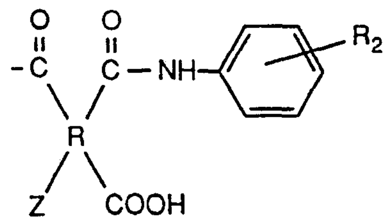 (IV)

vorliegen, worin Z für X oder Y steht und $R_2$ ein Wasserstoffatom, $C_1$-$C_4$-Alkyl, $C_1$-$C_4$-Alkoxy, Halogenatom oder eine Nitrogruppe bedeutet, mindestens 25 Mol% der endständigen Säurechloridgruppen der Formel V
-CO-R-COCl (V),
worin R die gleiche Bedeutung wie in Formel I hat, als eine Gruppe der Formel VI

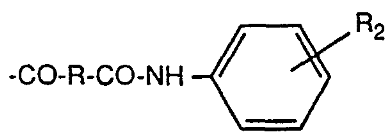 (VI)

vorliegen, worin $R_2$ die gleiche Bedeutung wie in Formel IV hat, mindestens 25 Mol% der endständigen Aminogruppen der Formal VII
-NH-$R_1$-$NH_2$ (VII),
worin $R_1$ die gleiche Bedeutung wie in Formel I hat, als eine Gruppe der Formel VIII, IX oder X

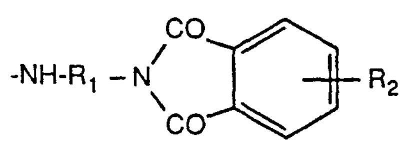 (VIII)

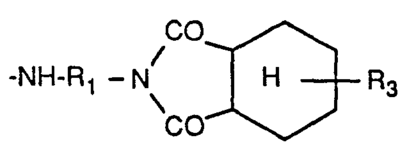 (IX)

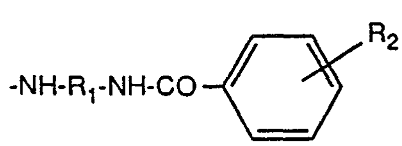 (X)

vorliegen, worin $R_2$ die gleiche Bedeutung wie in Formel IV hat und $R_3$ für ein Wasserstoffatom oder $C_1$-$C_4$-Alkyl steht, oder mindestens 25 Mol% aller endständigen Anhydrid-und Aminogruppen, endständigen Säurechlorid- und Aminogruppen oder endständigen Anhydrid-, Säurechlorid- und Aminogruppen der

Formeln III, IIIa, V und VII als eine Gruppe der Formeln IV, VI, VIII, IX und X vorliegen.

2. Polyamide, Polyamid-amidsäuren oder Polyamidsäuren sowie die zum entsprechenden Polyamidimid bzw. Polyimid cyclisierten Derivate gemäss Anspruch 1, dadurch gekennzeichnet, dass mindestens 40 Mol% aller endständigen Anhydrid-, Säurechlorid- oder Aminogruppen mit einer Gruppe der Formel IV, VI oder VIII bis X verkappt sind.

3. Polyamide, Polyamid-amidsäuren oder Polyamidsäuren sowie die zum entsprechenden Polyamidimid bzw. Polyimid cyclisierten Derivate gemäss Anspruch 1, dadurch gekennzeichnet, dass mindestens 10 Mol% der Reste $R_1$ für einen Rest der Formel II stehen.

4. Polyamide, Polyamid-amidsäuren oder Polyamidsäuren sowie die zum entsprechenden Polyamidimid bzw. Polyimid cyclisierten Derivate gemäss Anspruch 1, dadurch gekennzeichnet, dass im Strukturelement der Formel I R eine unsubstituierte Alkylengruppe mit 4-10 Kohlenstoffatomen, einen unsubstituierten monocyclischen, einen kondensierten bicyclischen oder einen unkondensierten bicyclischen aromatischen Rest darstellt, wobei bei letzterem die Aromatenkerne über das Brückenglied -O-,-CO- oder -$SO_2$-miteinander verbunden sind, und $R_1$ eine Bis-(methylen)-cyclohexangruppe, einen unsubstituierten oder durch Halogenatome, Alkyl- oder Alkoxygruppen mit je 1-4 Kohlenstoffatomen substituierten monocyclischen oder unkondensierten bicyclischen aromatischen Rest und einen Rest der Formel Ia bedeutet.

5. Polyamidsäuren gemäss Anspruch 1, dadurch gekennzeichnet, dass im Strukturelement der Formel I R einen Benzolring oder das Benzophenonringsystem, X und Y je eine Carboxylgruppe und $R_1$ die 1,3-oder 1,4-Phenylengruppe, den 4,4′-Diphenylmethan- oder 4,4′-Diphenyläthylrest und einen Rest der Formel II bedeuten, der in para- oder ortho-Stellung, vorzugsweise in para-Stellung, an die NH-Gruppen in Formel I gebunden ist, sowie die zum entsprechenden Polyimid cyclisierten Derivate.

6. Verfahren zur Herstellung von Polyamiden, Polyamid-amidsäuren oder Polyamidsäuren enthaltend das wiederkehrende Strukturelement der Formel I gemäss Anspruch 1, sowie den zum entsprechenden Polyamidimid bzw. Polyimid cyclisierten Derivaten, dadurch gekennzeichnet, dass man

(a) 1 Mol einer Verbindung enthaltend das wiederkehrende Strukturelement der Formel I und endständige Anhydridgruppen der Formeln III und IIIa mit 0,5 bis 2 Mol eines unsubstituierten oder durch $C_1$-$C_4$-Alkyl, $C_1$-$C_4$-Alkoxy, Halogen oder Nitrogruppe substituierten Anilins umsetzt oder

(b) 1 Mol einer Verbindung enthaltend das wiederkehrende Strukturelement der Formel I und endständige Säurechloridgruppen der Formel V mit 0,5 bis 2 Mol eines unsubstituierten oder durch $C_1$-$C_4$-Alkyl, $C_1$-$C_4$-Alkoxy, Halogen oder Nitrogruppe substituierten Anilins umsetzt oder

(c) 1 Mol einer Verbindung enthaltend das wiederkehrende Strukturelement der Formel I und endständige Aminogruppen der Formel VII mit 0,5 bis 2 Mol eines unsubstituierten oder durch $C_1$-$C_4$-Alkyl, $C_1$-$C_4$-Alkoxy, Halogen oder Nitrogruppen substituierten Phthalsäureanhydrids, unsubstituierten oder durch $C_1$-$C_4$-Alkyl substituierten Hexahydrophthalsäureanhydrids oder unsubstituierten oder durch $C_1$-$C_4$-Alkyl, $C_1$-$C_4$-Alkoxy, Halogen oder Nitrogruppe substituierten Benzoesäurechlorids umsetzt oder

(d) 1 Mol einer Verbindung enthaltend das wiederkehrende Strukturelement der Formel I und endständige Anhydrid- und Aminogruppen, oder endständige Säurechlorid und Aminogruppen oder endständige Anhydrid-, Säurechlorid- und Aminogruppen der Formeln III, IIIa, V oder VII mit 0,1 bis 1,9 Mol eines unsubstituierten oder substituierten Anilins und 0,1 bis 1,9 Mol eines unsubstituierten oder substituierten Phthalsäureanhydrids, unsubstituierten oder substituierten Hexahydrophthalsäureanhydrids oder unsubstituierten oder substituierten Benzoesäurechlorids umsetzt, wobei die Gesamtmenge an Anilin, Phthalsäureanhydrid, Hexahydrophthalsäureanhydrid und Benzoesäurechlorid 0,5 bis 2,0 Mol beträgt, oder

(e) 1 Mol einer Verbindung enthaltend das wiederkehrende Strukturelement der Formel I und endständige Anhydrid- und Säurechloridgruppen der Formel III, IIIa und V mit 0,5 bis 2,0 Mol eines unsubstituierten oder substituierten Anilins umsetzt und das erhaltene Polymer, worin X oder Y sowie X und Y für den Rest -COOH stehen, gegebenenfalls anschliessend zu den Polyamidimiden bzw. Polyimiden cyclisiert.

7. Formstoffe und Beschichtungen enthaltend ein Polyamid, eine Polyamid-amidsäure, Polyamidsäure, ein Polyamidimid oder Polyimid gemäss Anspruch 1.

8. Faserverbundsysteme enthaltend Verstärkungsfasern und ein Polyamid eine Polyamid-amidsäure, Polyamidsäure, ein Polyamidimid oder Polyimid gemäss Anspruch 1.

Patentansprüche für folgenden Vertragsstaat: ES

1. Verfahren zur Herstellung von Polyamiden, Polyamid-amidsäuren oder Polyamidsäuren, enthaltend das wiederkehrende Strukturelement der Formel I

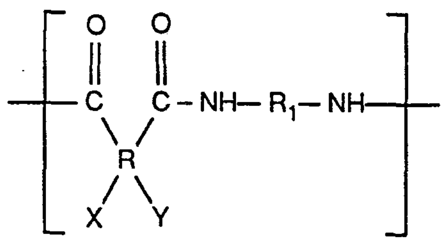

(I)

sowie den zum entsprechenden Polyamidimid bzw. Polyimid cyclisierten Derivaten, worin X und Y unabhängig voneinander je für -H oder -COOH stehen,
R einen aliphatischen Rest mit mindestens 2 Kohlenwasserstoffatomen, einen cycloaliphatischen, carbocyclisch-aromatischen oder heterocyclisch-aromatischen Rest bedeutet, wobei die Carbonamid- und Carboxylgruppen an verschiedene Kohlenstoffatome gebunden sind und sich die Carboxylgruppen, falls R einen cyclischen Rest und mindestens eines von X oder Y für die Carboxylgruppe steht, je in ortho-Stellung zu einer Carbonamidgruppe befinden, und $R_1$ einen aliphatischen Rest mit mindestens zwei Kohlenstoffatomen, einen cycloaliphatischen, araliphatischen, carbocyclisch-aromatischen oder heterocyclisch-aromatischen Rest bedeutet, wobei mindestens 1 Mol% der Reste $R_1$ für einen Rest der Formel

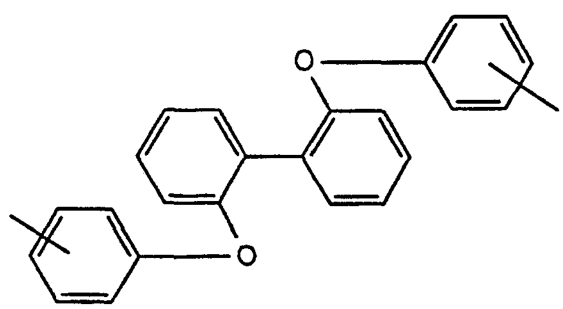

(II)

steht, dadurch gekennzeichnet, dass mindestens 25 Mol% der endständigen Anhydridgruppen der Formel III oder IIIa

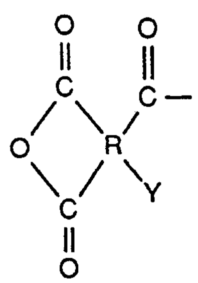

(III) oder

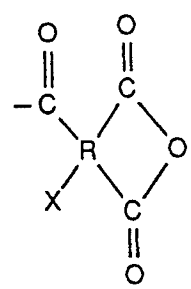

(IIIa),

worin X, Y und R die gleiche Bedeutung wie in Formel I haben, als eine Gruppe der Formel IV

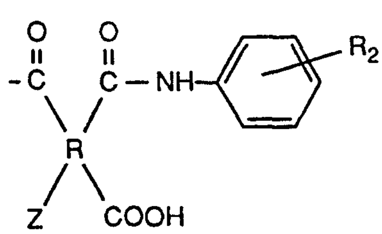

(IV)

vorliegen, worin Z für X oder Y steht und $R_2$ ein Wasserstoffatom, $C_1$-$C_4$-Alkyl, $C_1$-$C_4$-Alkoxy, Halogenatom oder eine Nitrogruppe bedeutet, mindestens 25 Mol% der endständigen Säurechloridgruppen der Formel V

-CO-R-COCl (V),
worin R die gleiche Bedeutung wie in Formel I hat, als eine Gruppe der Formel VI

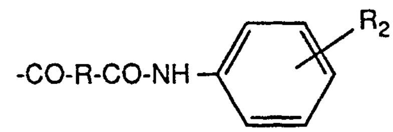

(VI)

vorliegen, worin $R_2$ die gleiche Bedeutung wie in Formel IV hat, mindestens 25 Mol% der endständigen Aminogruppen der Formal VII
$-NH-R_1-NH_2$ (VII),
worin $R_1$ die gleiche Bedeutung wie in Formel I hat, als eine Gruppe der Formel VIII, IX oder X

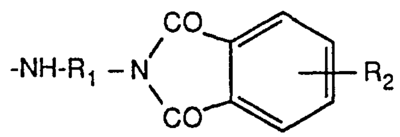

(VIII)

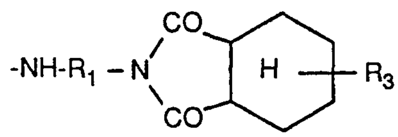

(IX)

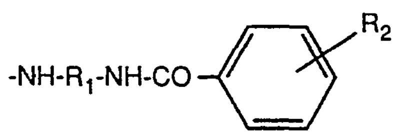

(X)

vorliegen, worin $R_2$ die gleiche Bedeutung wie in Formel IV hat und $R_3$ für ein Wasserstoffatom oder $C_1$-$C_4$-Alkyl steht, oder mindestens 25 Mol% aller endständigen Anhydrid-und Aminogruppen, endständigen Säurechlorid- und Aminogruppen oder endständigen Anhydrid-, Säurechlorid- und Aminogruppen der Formeln III, IIIa, V und VII als eine Gruppe der Formeln IV, VI, VIII, IX und X vorliegen, dadurch gekennzeichnet, dass man

(a) 1 Mol einer Verbindung enthaltend das wiederkehrende Strukturelement der Formel I und endständige Anhydridgruppen der Formeln III und IIIa mit 0,5 bis 2 Mol eines unsubstituierten oder durch $C_1$-$C_4$-Alkyl, $C_1$-$C_4$-Alkoxy, Halogen oder Nitrogruppe substituierten Anilins umsetzt oder

(b) 1 Mol einer Verbindung enthaltend das wiederkehrende Strukturelement der Formel I und endständige Säurechloridgruppen der Formel V mit 0,5 bis 2 Mol eines unsubstituierten oder durch $C_1$-$C_4$-Alkyl, $C_1$-$C_4$-Alkoxy, Halogen oder Nitrogruppe substituierten Anilins umsetzt oder

(c) 1 Mol einer Verbindung enthaltend das wiederkehrende Strukturelement der Formel I und endständige Aminogruppen der Formel VII mit 0,5 bis 2 Mol eines unsubstituierten oder durch $C_1$-$C_4$-Alkyl, $C_1$-$C_4$-Alkoxy, Halogen oder Nitrogruppen substituierten Phthalsäureanhydrids, unsubstituierten oder durch $C_1$-$C_4$-Alkyl substituierten Hexahydrophthalsäureanhydrids oder unsubstituierten oder durch $C_1$-$C_4$-Alkyl, $C_1$-$C_4$-Alkoxy, Halogen oder Nitrogruppe substituierten Benzoesäurechlorids umsetzt oder

(d) 1 Mol einer Verbindung enthaltend das wiederkehrende Strukturelement der Formel I und endständige Anhydrid- und Aminogruppen, oder endständige Säurechlorid und Aminogruppen oder endständige Anhydrid-, Säurechlorid- und Aminogruppen der Formeln III, IIIa, V oder VII mit 0,1 bis 1,9 Mol eines unsubstituierten oder substituierten Anilins und 0,1 bis 1,9 Mol eines unsubstituierten oder substituierten Phthalsäureanhydrids, unsubstituierten oder substituierten Hexahydrophthalsäureanhydrids oder unsub stituierten oder substituierten Benzoesäurechlorids umsetzt, wobei die Gesamtmenge an Anilin, Phthalsäureanhydrid, Hexahydrophthalsäureanhydrid und Benzoesäurechlorid 0,5 bis 2,0 Mol beträgt, oder

(e) 1 Mol einer Verbindung enthaltend das wiederkehrende Strukturelement der Formel I und endständige Anhydrid- und Säurechloridgruppen der Formel III, IIIa und V mit 0,5 bis 2,0 Mol eines unsubstituierten oder substituierten Anilins umsetzt und das erhaltene Polymer, worin X oder Y sowie X und Y für den Rest -COOH stehen, gegebenenfalls anschliessend zu den Polyamidimiden bzw. Polyimiden

cyclisiert.

2. Verfahren gemäss Anspruch 1, dadurch gekennzeichnet, dass man 1 Mol einer Verbindung enthaltend das wiederkehrende Strukturelement der Formel I und endständige Aminogruppen der Formel VII mit 0,5 bis 2 Mol eines unsubstituierten oder durch $C_1$-$C_4$-Alkyl, $C_1$-$C_4$-Alkoxy, Halogen oder Nitrogruppen substituierten Phthalsäureanhydrids, unsubstituierten oder durch $C_1$-$C_4$-Alkyl substituierten Hexahydrophthalsäureanhydrids oder unsubstituierten oder durch $C_1$-$C_4$-Alkyl, $C_1$-$C_4$-Alkoxy, Halogen oder Nitrogruppe substituierten Benzoesäurechlorids umsetzt und das erhaltene Polymer gegebenenfalls anschliessend zu den Polyamidimiden bzw. Polyimiden cyclisiert.

3. Verfahren gemäss Anspruch 1, dadurch gekennzeichnet, dass man die Umsetzung in einem inerten organischen Lösungsmittel durchführt.

4. Verfahren gemäss Anspruch 3, dadurch gekennzeichnet, dass man als Lösungsmittel ein polares, aprotisches Lösungsmittel verwendet.